## Europäisches Patentamt

## European Patent Office

## Office européen des brevets

(11) Publication number: **0 078 659**
A2

# (12) EUROPEAN PATENT APPLICATION

(21) Application number: **82305703.9**

(22) Date of filing: **27.10.82**

(51) Int. Cl.³: **B 01 D 13/00**, B 01 D 31/00

(30) Priority: **30.10.81 SE 8106424**

(43) Date of publication of application: **11.05.83**
**Bulletin 83/19**

(84) Designated Contracting States: **BE DE FR GB IT NL**

(71) Applicant: **ALFA-LAVAL AB, Box 500, S-147 00 Tumba (SE)**

(72) Inventor: **Sandblom, Robert Mauritz, Vargardavagen 28, S-125 31 Älsvjö (SE)**

(74) Representative: **Lerwill, John et al, A.A. Thornton & Co. Northumberland House 303-306 High Holborn, London, WC1V 7LE (GB)**

(54) **Membrane filtration apparatus.**

㊿ A membrane filtration apparatus comprises a stack of membranes assembled to define filtrate compartments (4) between pairs (1, 2) of membranes and channels (7) for concentrate between the membrane pairs. Inlet and outlet ports (+, -) for conducting concentrate to and from the channels are formed by a mulitplicity of conduits extending transversely through the stack of membranes and distributed over essentially the entire working area of the membranes so that at least each inlet port and outlet port not next to an edge of the stack has a plurality of neighbouring outlet ports and inlet ports, respectively, so that the length of the concentrate flow channels is independent of the size and geometry of the membranes and is determined by the distance between adjacent inlet and outlet ports.

EP 0 078 659 A2

- 1 -

## Membrane filtration apparatus

The present invention relates to a membrane filtration apparatus for ultra filtration, microfiltration or reverse osmosis. More specifically, the invention relates to a membrane filtration apparatus of the plate type, i.e. comprising a plurality of membrane elements held together in a stack, said elements being supported and sealed relative to each other to form flow channels for fluid to be filtered and filtrate receiving compartments on opposite sides of the respective membrane elements, inlet and outlet ports communicating with said flow channels for said fluid to flow across the membrane elements through said flow channels, and a filtrate outlet communicating with said filtrate receiving compartments.

In industrial ultrafiltration convection along membrane surfaces is enforced to achieve the highest possible productivity, i.e. highest possible flux through the membranes. Therefore, the membrane apparatus is always designed for convection on the concentrate side from inlet to outlet. With respect to the concentrate flow, within both the turbulent region and the laminar region, the flux increases with increased flow velocity. Since increased flow velocity requires higher pumping power, the dimensioning of industrial membrane modules always implies a compromise between power requirement and flux.

The main reason that increased flux requires rapidly increasing pump capacity is the so called concentration polarization, i.e. the formation at the membrane surfaces of layers of higher concentration than in the central parts of the flow channels. Within the turbulent region, the concentration polarisation can be reduced or eliminated by increasing the flow velocity. Since, however, the power requirement increases very rapidly in comparison with gained capacity in form of increased flux, the greatest possibilities for improving the process economy for industrial ultrafiltration would seem to be by use of laminar flow in thin, preferably short flow channels, whereby a better ultilization of the pumping power is achieved.

With laminar flow the concentration polarisation is reduced by increased shear forces between the fluid and the membrane surface. The shear forces can be increased on one hand by reduced channel height and on the other hand by increased flow velocity. Furthermore it is known that the concentration polarization increases with the channel length, and consequently short parallel flow channels should be aimed at.

In the ultrafiltration apparatuses in current use, the length of the flow channels is determined by the shape and the size of the membrane plates since the concentrate flows either in essentially one direction from one inlet or a set of inlets at one end of the membranes to one outlet or a set of outlets at the other end of the membranes, or - in the case of circular plate apparatus - in the radial direction either from the centre to the periphery or vice versa. Thus, the channel length is directly related to the length or the radius of the plate elements.

Since means for sealing and supporting of the plate elements, the inlet and outlet ports for concentrate, and the outlet for the filtrate require certain minimal space, short channels for the concentrate flow implies poor utilization of the available membrane surface. On the other hand, it should be noted that with the use of long channels - which should provide better utilization of the available membrane surface, although at the same time suffer the abovesaid disadvantage of increasing concentration polarization in the flow direction - a practical upper length limit is reached fairly soon due to large pressure drops per unit length. Therefore, it is not a matter of mere accident that ultrafiltration modules of plate type present on the market exhibit channel lengths which vary between a few decimeters and some metres.

It should be further noted that plate apparatuses with small membrane surfaces, apart from providing a larger proportion passive membrane surface, also require longer sealing per filter area which increases the plant operation risks.

The present invention seeks to reduce the above drawbacks of the known apparatus and accordingly provides a membrane filtration apparatus characterized in that said inlet and outlet ports are formed by a multiplicity of conduits extending transversely through the stack of membrane elements and sealed from the filtrate receiving compartments, said conduits being distributed over substantially the entire working area of the membrane elements in such an arrangement that at least each inlet port and outlet port not located next to an edge of the stack has a plurality of outlet ports and inlet ports respectively, located adjacent thereto, whereby the length of the flow channels through which said fluid passes is independent of the size and geometry of the membrane elements and is limited to the flow distance between adjacent inlet and outlet ports.

With an apparatus according to the invention the interdependency between the size of the membrane elements and the length of the flow channels is eliminated and the desired features of short flow channels, large membrane elements and short sealing per membrane surface are combined.

Instead of localising the inlet and outlet ports to certain positions with respect to the membrane element geometry, a multiplicity of inlet and outlet openings are distributed in a particular pattern covering substantially the entire membrane surface. According to a preferred embodiment of the invention, pairs of adjacent membrane elements are joined together around said openings to form conduit sections sealed against the filtrate receiving compartments enclosed within the pairs of elements. The sealing of the openings through the membranes can be made by welding, gluing or through mechanical sealings. The pairs of elements are arranged in the stack with said conduit sections of the different element pairs coinciding with each other to form inlet and outlet conduits through the stack. By arranging support means within the filtrate receiving compartments or spacing means between the pairs of membrane elements, flow channels for concentrate of suitable shape and channel depth are provided in free communication with said inlet and outlet ports.

The nature and advantages of the invention will now be further illustrated by detailed description of a few embodiments given by way of example only, with reference to the accompanying drawings, in which:-

Figure 1 is a part section view cut in parallel with the membrane elements through a membrane stack embodying the invention;

Figures 2 and 3 are part sections of the membrane stack taken along the lines II - II and III-III, respectively in Figure 1;

Figure 4 is a part section view parallel with the membrane elements and showing an alternative support structure to the support structure shown in Figures 2 and 3;

Figure 5 shows a connection plate for use with the membrane stacks shown of Figures 1 - 4; and

Figure 6 is a part section view parallel with the membrane elements through a further membrane stack according to the invention.

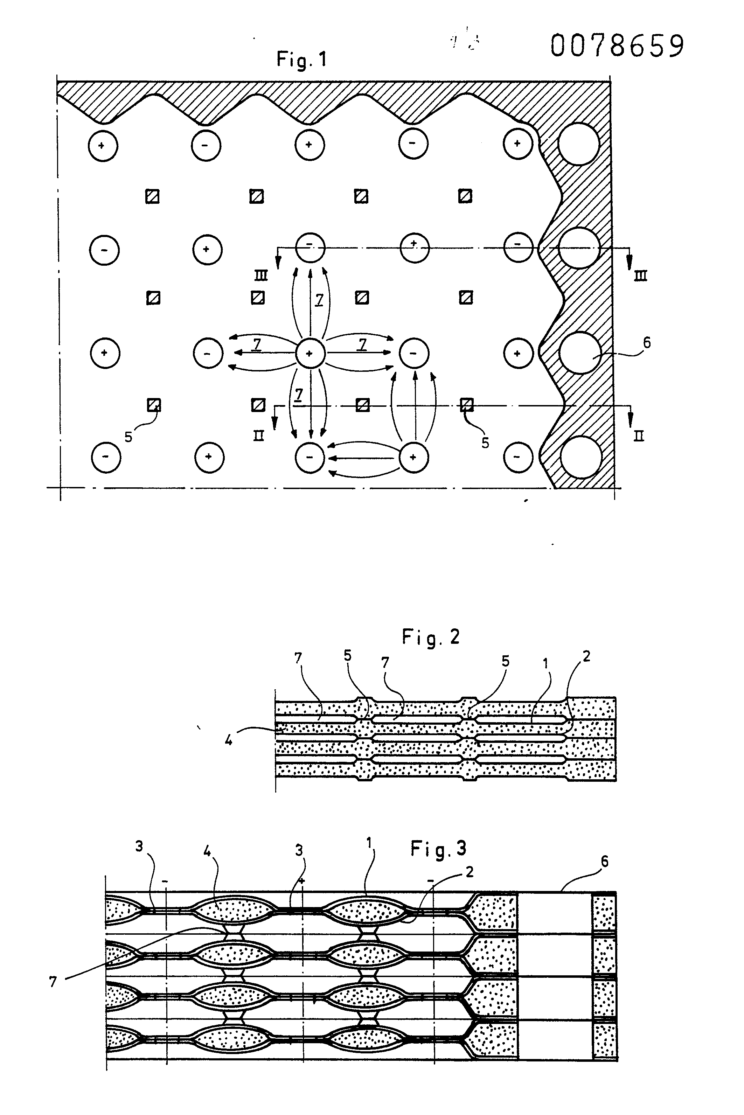

The membrane stack of Figs. 1 to 3 comprises a plurality of superposed membrane elements with circular inlet and outlet ports distributed in a symmetrical rectangular array or pattern over the membrane surfaces. The inlet ports are designated by plus signs (+) and the outlet ports by minus signs (-). Pairs of membrane elements 1, 2 are joined and sealed to each other around the port apertures (+, -) to form conduit sections 3. The conduit sections are sealed against the filtrate receiving compartments 4 which are formed by means of a porous support structure disposed between the pairs of membranes 1, 2. Protrusions 5 of the support structure form support points for contact between successive membrane pairs 1, 2 in the regions between the inlet ports and the outlet ports. The filtrate receiving compartments 4 are connected through the porous support structure with the filtrate outlet ports 6 provided in the periphery of the stack. The filtrate receiving compartments 4 are sealed along the edges of the stack in any convenient way, for example by replacing the porous structure at the membrane edges by some sealing material (not shown).

Between successive membrane pairs 1, 2 concentrate flow channels 7 are formed. From each inlet port (+), except those next to the membrane edges, there extend four equal flow channels 7 in different main directions towards the four symmetrically located adjacent outlet ports (-). Each outlet port (-), except those next to the membrane edges, is similarly surrounded by four symmetrically disposed inlet ports (+) to receive therefrom concentrate flowing from the inlet ports through four equal flow channels 7. Each support point 5 is located at the centre of a square area having two inlet ports at one pair of diagonally opposite corners and two outlet ports at the other pair of diagonally opposite corners, i.e. in the "division point" between the concentrate flows through the four flow channels 7 having main flow directions along the sides of said square.

In the embodiment according to Figs. 1 and 3 the available channel width of each flow channel 7 is largest in the middle region between an inlet port (+) and an outlet port (-) and becomes smaller towards the ports. To achieve an optimal flow distribution over the entire available channel width, the flow channels 7 are designed, as can be seen in Fig. 3, with a greater channel depth in the sections of the flow channels close to the inlet and outlet ports and with a smaller channel depth in the intermediate section of the flow channel. In Fig. 3 the height scale is considerably exaggerated. In reality the height of the flow channel 7 is in the range of 0.05-0.5 mm and the thickness of each membrane pair 1, 2 is in the range of 0.5-2 mm.

The areas of the inlet and outlet ports are dimensioned so that the main part of the pressure drop between the inlet and the outlet of the device is obtained in the flow channels 7 formed between the successive membrane pairs 1, 2.   If, for a certain number of membrane pairs in the stack with a certain opening area, too high a flow resistance is obtained in the inlet and outlet ports when feeding concentrate from one end of the stack, connection plates can be arranged at both ends of the stack for feeding and discharging the concentrate.     A connection plate can also be provided within the stack to serve the two stack sections located on either side of the connection plate.

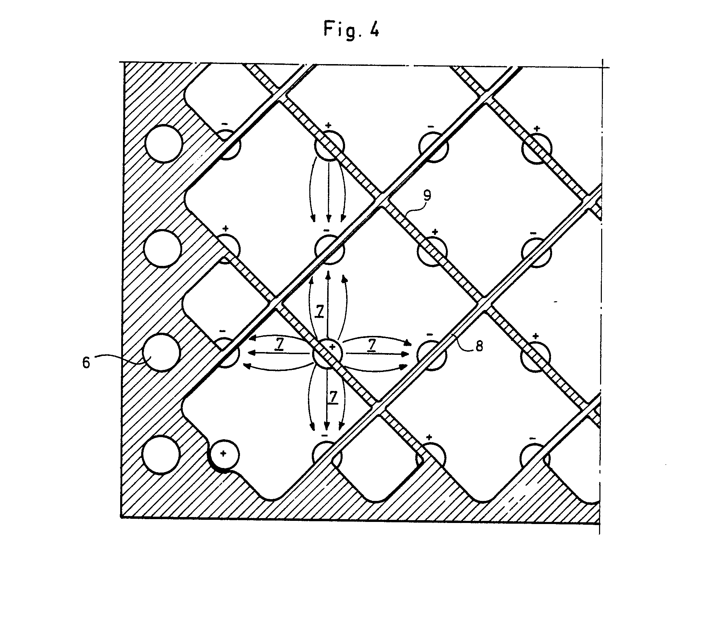

Figure 4 shows an alternative way to provide support points for the membranes and to achieve a suitable channel height for the flow channels 7.    A network structure 8, 9 is arranged between the successive membrane pairs 1, 2.    By localising grid elements 8 along a row of outlet ports (-) and grid elements 9 perpendicular to the element 8 along a line of inlet ports (+), a minimal disturbance of the concentrate flow in the flow channels 7 is obtained.

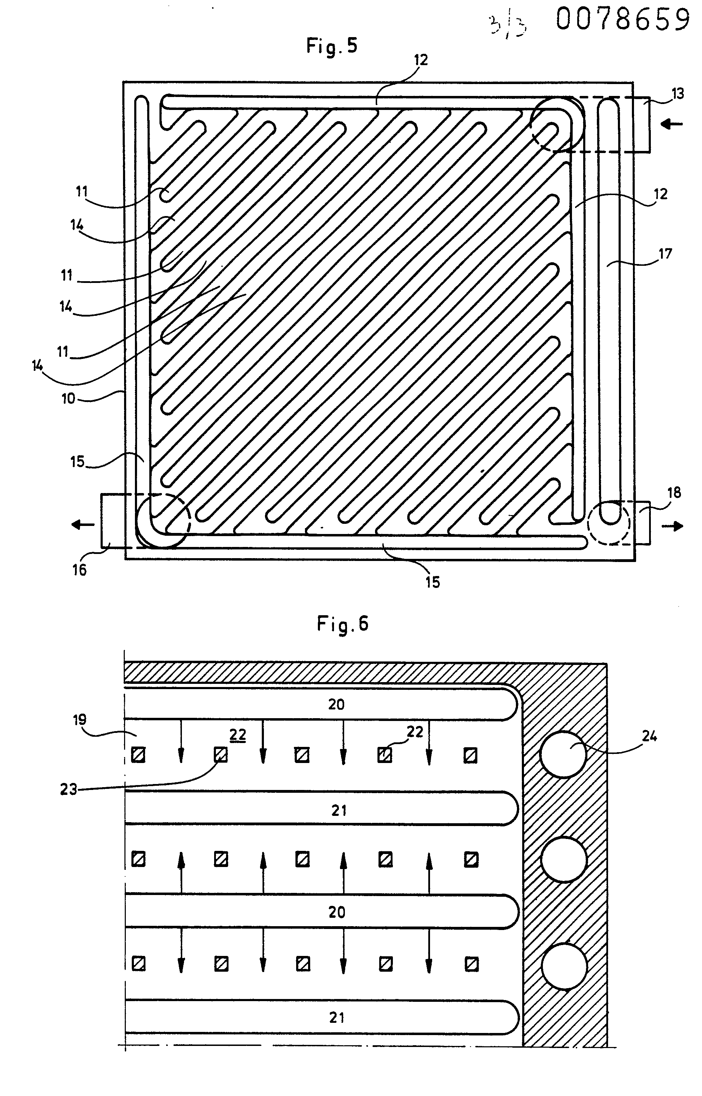

Figure 5 shows a connection plate 10 designed to serve as an inlet and outlet manifold for the concentrate flows and to be located at one end of the membrane stack shown in Figs. 1-3.    A first series of parallel grooves 11 are located to coincide with parallel rows of outlet ports (+).    For sealing against the first membrane pair 1, 2 a plane intermediate plate (not shown) provided with apertures coinciding with the inlet and outlet ports can be fixed between the outer membrane and the connection plate 10.    The grooves 11 communicate at two edges of the plate 10 with deeper grooves 12, which are connected with a concentrate inlet 13.    Similarly, the outlet ports (-) communicate through apertures in the intermediate plate (not shown) with a second series of parallel grooves 14 in plate 10, and which grooves through deeper grooves 15 along the remaining two edges of the plate 10 are connected with a concentrate outlet 16.    A further groove 17 is provided at one edge of the plate 10 to connect through said intermediate plate the filtrate outlet ports 6 with a filtrate outlet 18.

The connection plate 10 and said perforated plane intermediate plate can of course be combined in one plate having apertures coinciding with the inlet and outlet ports through the stack.    A connection plate or plate combination to be placed within the stack to serve the two parts of the stack on either side of the connection plate is suitably connected with inlet and outlet ports by means of a channel system provided within the plate and openings at both sides of the plate coinciding with the inlet and outlet ports, said channel system further being connected to an inlet and outlet for concentrate.

Fig. 6 shows a further embodiment of the invention. Each membrane element is provided with a multiplicity of elongated parallel openings 20, 21, every second opening 20 forming an inlet port and the remaining openings 21 forming outlet ports for distribution of concentrate from the inlet ports, except those next to the edge of the stack, in essentially two opposite directions to two adjacent outlet ports 21.    Between each inlet port 20 and adjacent outlet port 21 there are provided flow channels 22 for concentrate, in which channels support points 23 are provided at suitable distances from each other.    As for the above described embodiment, pairs of membranes  are suitably joined around said openings 20, 21 to form between them filtrate receiving compartments sealed against said concentrate flow channels, the filtrate receiving compartments being connected with filtrate outlet ports 24 at the periphery of the stack. Without any substantial change of the flow pattern, the elongated inlet and outlet ports can be replaced by rows of preferably round openings through the membranes, which openings are located at essentially shorter distance from each other than the distance between neighbouring rows.     In accordance with the above described embodiment, a connection plate can be used which is provided with two series of parallel grooves, every second one of which communicates with the inlet ports and the remaining grooves communicating with the outlet ports.

From the foregoing description of the exemplary embodiments it will be understood that a great number of different patterns of inlet and outlet ports can be designed within the scope of the invention. The common feature for all those imaginable patterns is that a certain specific flow pattern for the concentrate flow between two membrane elements from one inlet port to a plurality of surrounding outlet ports can be identified within a fraction of the total membrane surface and that this flow pattern is repeated several times over the remaining parts of the membrane surface, whereby concentrate flow channels of desired short length are obtained completely independent of the membrane element size and shape.

CLAIMS:

1.        A membrane filtration apparatus comprising a plurality of membrane elements (1,2) held together in a stack, said elements being supported and sealed relative to each other to form flow channels (7) for fluid to be filtered and filtrate receiving compartments (4) on opposite sides of the respective membrane elements, inlet and outlet ports communicating with said flow channels (7) for said fluid to flow across the membrane elements (1, 2) through said flow channels (7), and a filtrate outlet (6) communicating with said filtrate receiving compartments (4), characterized in that said inlet and outlet ports (+, -) are formed by a multiplicity of conduits extending transversely through the stack of membrane elements (1, 2) and sealed from the filtrate receiving compartments (4), said conduits being distributed over substantially the entire working area of the membrane elements in such an arrangement that at least each inlet port (+) and outlet port (-) not located next to an edge of the stack has a plurality of outlet ports (-) and inlet ports (+), respectively, located adjacent thereto, whereby the length of the flow channels (7) through which said fluid passes is independent of the size and geometry of the membrane elements and is limited to the flow distance between adjacent inlet and outlet ports (+, -).

2.        A membrane filtration apparatus according to claim 1, wherein said plurality of ports adjacent each inlet port (+) and outlet port (-) are spaced equidistantly therefrom.

3.      A membrane filtration apparatus according to claim 1 or 2, wherein a multiplicity of openings (+, -) are provided through each membrane element and distributed according to a predetermined pattern over substantially the entire working area of the element, pairs of adjacent membrane elements (1, 2) being joined around said openings (+, -) to form sections (3) of said conduits sealed from the filtrate receiving compartments, said conduit sections being in free communication with the flow channels (7) on either side of said element pairs (1, 2), and the element pairs being arranged in the stack with said conduit sections (3) of the different element pairs aligned with each other to form said conduits through the stack.

4.      A membrane filtration device according to claim 3, wherein the membrane elements (1, 2) of each pair are firmly joined to each other around said openings (+, -) by welding or gluing.

5.      A membrane filtration apparatus according to any one of the preceding claims, wherein said inlet and outlet ports (+, -) are so distributed over the surface of the membrane elements that fluid passing through one inlet port (+) flows in essentially four different main directions to four adjacent inlet ports (-), and fluid passing through one outlet port (-) comes from four surrounding inlet ports (+).

6.      A membrane filtration device according to claim 5, wherein a flow channel (7) for said fluid to be filtered, formed between two adjacent membrane elements and extending from one inlet port (+) to one of said adjacent outlet ports (-) has a greater channel depth in the parts of the flow channel located near

0078659

the inlet and outlet ports, and a smaller channel depth
in the intermediate parts of the flow channel (7).

7.      A membrane filtration apparatus according to
any of the claims 1-4, wherein said conduits (20, 21)
are arranged in a multiplicity of rows, essentially
at the same distance from each other and extending
across the membrane elements, every single row comprising
either an elongated port or several ports of the same form
spaced apart at a distance essentially shorter than the
distance between two adjacent rows, so that each inlet
port row (20) and outlet port row (21) not located next
to an edge of the stack is disposed between two outlet
port rows and two inlet port rows, respectively, so that
fluid flows to each said outlet port and from each said
inlet port in substantially two opposite directions.

8.      A membrane filter apparatus according to any one
of the preceding claims, wherein adjacent membrane
elements between which said flow channels are formed
contact each other directly at support points (5, 23),
said support points being formed by protrusions of support
means provided between two membrane elements between
which said filtrate receiving compartments (4) are
confined.

9.      A membrane filter apparatus according to any
of the claims 1-7, wherein a reticular support structure
(8, 9) is arranged between two adjacent membrane
elements between which said flow channels (7) are formed.

10.      A membrane filter apparatus according to any of
the claims 1-6, wherein at least one connection plate (10)
is provided and has a plurality of essentially parallel
channels (11, 14), every second channel (11) being part of a system of distribution channels for parallel
connection of a group of inlet ports (+) to an inlet
(13) for said fluid, and the intervening channels (14)
being part of a system of collection channels for
parallel connection of a group of outlet ports (-)
to an outlet (16) for said fluid, each of said channels
having openings coinciding with said conduits for
connecting a row of inlet ports or a row of outlet ports
located along the channel.

11.     A membrane filtration device according to any
of the preceding claims, wherein at least one connection
plate is provided within the stack, the connection plate
being provided with connection openings at both sides
to serve two different parts of the stack.

Fig. 1

Fig. 2

Fig. 3

Fig. 4

## Fig. 5

## Fig. 6